Europäisches Patentamt

**European Patent Office**

Office européen des brevets

(11) Publication number: **0 073 340**
A2

## (12) EUROPEAN PATENT APPLICATION

(21) Application number: **82106708.9**

(22) Date of filing: **24.07.82**

(51) Int. Cl.³: **C 09 C 1/36**

(30) Priority: **31.08.81 US 298821**

(43) Date of publication of application: **09.03.83**
Bulletin **83/10**

(84) Designated Contracting States: **BE DE FR GB IT NL**

(71) Applicant: **GULF AND WESTERN INDUSTRIES, INC., 1, Gulf + Western Plaza, New York, N.Y. 10023 (US)**

(72) Inventor: **Brand, John R., 546 Columbia Avenue, Palmerton Pennsylvania 18071 (US)**

(74) Representative: **Weitzel, Wolfgang, Dr.-Ing., St. Pöltener Strasse 43, D-7920 Heidenheim (DE)**

(54) **Titanium dioxide pigment having improved photostability and process for producing same.**

(57) A titanium dioxide pigment produced by a continuous process and having a photostability of greater than about −4.5 is provided. The pigment includes a coating of amorphous dense silica in an amount between about 0.6% and about 10% and a coating of alumina in an amount between about 1.5% and about 10% by weight of the total pigment.

The pigment of the present invention is produced in a continuous process wherein a soluble silicate is initially added to a titanium dioxide slurry at a temperature of at least about 85°C and a pH of between 9.8 and 10.1. The soluble silicate is added in an amount sufficient to achieve a dense silica level on the treated pigment of between about 0.6% and about 10% calculated as $SiO_2$ by weight based on the weight of the treated pigment. The slurry is then be neutralized in at least three neutralization steps by the addition of amounts sufficient of an acid to achieve pH levels of between about 9.6 and about 9.8, about 9.2 and about 9.4, and about 3 and about 4 during each of said neutralization steps. At a pH of between about 5 and about 6.5, an aluminium-containing material is then added to the slurry in an mount sufficient to achieve an alumina level of between about 1.5% and about 10% of the total pigment. The pigment is then neutralized, filtered, washed and dried.

0073340

TITLE:  TITANIUM DIOXIDE PIGMENT HAVING IMPROVED
        PHOTOSTABILITY AND PROCESS FOR PRODUCING SAME

## BACKGROUND OF THE INVENTION

The present invention relates generally to a titanium
dioxide pigment and, more particularly, to a titanium
dioxide pigment having improved photostability. The pigment of the present invention is produced in a continuous
process and has a dense silica layer of between about
0.6 % and about 10 % by weight of the total pigment, and
an alumina layer of between about 1.5 % and about 10 %
by weight of the total pigment and a photostability of
greater than at least about -4.0. The pigment is produced
in a continuous process by careful control of the pH and
temperature of the slurry before, during and after the
dense silica addition and during the first two of a
series of neutralization steps.

Many procedures for treating particulate rutile or anatase
titanium dioxide with hydrous oxides of silicon and aluminium to achieve certain desired physical properties are
known. The prexipitation of dense amorphous silica to form
a protective barrier around a titanium dioxide ($TiO_2$)
particle was first described in U.S. Patent No. 2,885,366
which issued on June 28, 1956 to R. K. Iler. Iler taught
that a batch treatment using very slow neutralization of
a silicate in the presence of the solid $TiO_2$ particle
caused the slow growth of a silica envelope as the system
was maintained near equilibrium. Specifically, Iler
taught the addition of monosilicic acid over a period
of nearly 7 hours at temperatures between 60°C and 120°C
followed by agitation for 19 days.

U.S. Patent No. 3,437,502 which issued on April 8, 1969 and Re 27,818 which issued on November 27, 1973 both to A. J. Werner teach the addition of hydrous alumina at a pH less than 7 to $TiO_2$ particles coated with dense silica. The dense silica coating was accomplished by the precipitation of sodium silicate by a slow batch process, i.e., typically a silicate was added over a two-hour period followed by increasing the temperature to 90°C and decreasing the pH to 6.0 over a five hour period.

U.S. Patent Nos. 3,928,057 which issued to R.L. DeColibus on December 23, 1975; 3,954,496 which issued to K. Batzar on May 4, 1976; and 4,075,031 which issued to A. Allen on February 21, 1978 all disclose coated pigments which include a dense silica layer applied by slow precipitation using batch-finishing processes.

Applicant's earlier issued Patent No. 4,199,370 which issued on April 22, 1980 discloses the slow precipitation of a dense silica coating as a portion of a four-stage hydrous oxide treatment to provide high opacity and durability to a titanium dioxide pigment intended for use in interior and exterior paints. A continuous finishing process for precipitating dense silica was also described in which the pH and temperature were controlled during the step-by-step neutralization of the silica.

W.A. West Patent No. 4,152,412 which issued on November 14, 1978, describes a continuous finishing process for precipitating dense silica upon titanium dioxide particles. An application is currently pending to reissue the patent. In that process, the temperature of the slurry was adjusted to between about 85ºC and about 95ºC prior
to the rapid addition of sodium silicate to obtain a
silica coating of between about 1.5 % and about 15 %
$SiO_2$ on the pigment. Optionally, the pH could be adjusted
to between 9 and 10.5 before the silicate addition. The
pH was then adjusted to between 7 and 10.5 prior to a
15 to 60-minute cure at a temperature between 80ºC and
100ºC. West's process requires that the silicate contact
the $TiO_2$ particles at a pH of between 7 and 10.5 for at
least 15 minutes. Sodium aluminate and an acid are then
simulatenously added to maintain a pH of 8.

The batch processes described in many of the aforementioned patents, while permitting excellent control of
the coating process, are extremely time-consuming and
costly. In such processes, the precipitation of silica is
done very slowly to permit sealing of the pigment surface.
Coating particulate titanium dioxide in a continuous
finishing system comprising a series of cascading treatment tanks is a relatively speedy and inexpensive process
if it can be conducted in such a way as to control the
uniformity and density of the coating.

It is thus an object of the present invention to provide
a pyrogenic titanium dioxide pigment that exhibits
superior durability, gloss and optical proberties.

It is another object of the present invention to provide
such a titanium dioxide pigment which is processed in a
continuous finishing system comprising a series of cascading treatment tanks.

It is yet another object of the present invention to provide such a titanium dioxide pigment wherein the pH and temperature of the slurry are closely controlled during the silica addition to control the degree of departure from equilibrium with the $TiO_2$ surface.

It is yet still another object of the present invention to provide such a commercially acceptable titanium dioxide pigment which utilizes less dense silica than heretofore used in a continuous process.

## SUMMARY OF THE PRESENT INVENTION

To the establishment of the above objects and advantages, the present invention, in brief summary, comprises a titanium dioxide pigment produced by a continuous process and having a photostability of greater than about -4.0. The pigment includes a coating of amorphous dense silica in an mount between about 0.6 % and about 10 % and a coating of alumina in an amount between about 1.5 % and about 10 % by weight of the total pigment.

The pigment of the present invention is processed in a continuous process wherein a soluble silicate is initially added to the slurry at a temperature of at least about 85°C and at a pH of between 9.8 and 10.1. The soluble silicate is added in an amount sufficient to achieve a dense silica level on the treated pigment of between about 0.6 % and about 10% calculated as $SiO_2$ by weight. The

slurry is then neutralized in at least 3 neutralization steps by the addition of amounts sufficient of an acid to achieve pH levels of between about 9.6 and about 9.8; about 9.2 and about 9.4 and about 3 and about 4 during each of said successive steps. At a pH of between about 5 and about 6.5, an aluminum-containing material is added to the slurry in an amount sufficient to achieve an alumina level on the pigment of between about 1.5 % and about 10 % of the total pgiment. After a final pH adjustment the pigment is filtered, washed and dried.

## DESCRIPTION OF THE PREFERRED EMBODIMENTS

The present invention contemplates a novel process for formulating a titanium dioxide pigment haveing improved photostability and the resultant product produced thereby.

According to the continuous, wet finishing process of the present invention, a raw $TiO_2$ pigment is provided which may be produced by the vapor-phase oxidation of titanium tetrachloride. The pigment is slurried in water at from about 5 % to about 40 % by weight of solids. The degree of dispersion or flocculation is adjusted by the addition of reagents known to those skilled in the art. The deflocculated slurry should preferably contain between about 20 % and about 30 % by weight of solids and most preferably about 25 % by weight.

The slurry is classified to remove any gritty material, introduced into a vessel and heated to approximately 90°C, preferably with steam. The addition of the silica containing material, i.e. sodium silicate, to produce the dense silica coating on the pigment must be effected with close control of temperature and pH in order to obtain adequate gloss and durability characteristics in the resultant pigment. Further, care must be taken to control the speed of precipitation. If the silica is precipitated too quickly, the physical properties of the resultant pigment will suffer.

It has been found that the pH and temperature of the slurry during precipitation of the silica containing material are particularly important relative to the photostability of the resultant coated pigment. It is important to add the sodium silicate to the aqueous titanium dioxide slurry under conditions of pH and temperature that will insure close contact between the pigment and dissolved silica prior to the initiation of precipitation. The effectiveness of a particular pH may dempend, in part, upon the temperature of the slurry. It has been found, for example, that a slurry pH of 11.5 at room temperature may be equivalent to a pH of between about 9.8 and about 10 at a temperature of about 90°C.

During the initial period of contact between the sodium silicate and the pigment, generally at least five minutes, it is theorized that the active silica in the sodium silicate solution establishes nucleation sites on the titania surfaces. Subsequent careful precipitation of the silica is thought to cause the growth of dense, amorphorus silica at these sites with the result that most of the precipitated silica becomes closely associated with the titania. As prexipitation continues, the titania surface becomes essentially covered with a coating of dense amorphous silica. Silica which is not precipitated directly upon the titanium dioxide particles or which is predipitated too rapidly thereon, may result in a voluminous coating, which does not produce a pigment with adequate durability; and it may even harm the gloss of paint films on which the pigment is used.

This dense silica addition, which may be done with most silica-containing materials, preferably aqueous sodium silicate, must be done without departing too far from chemical equiligrium with the nucleated site on the titanium dioxide surface. The aqueous sodium silicate is added in an amount sufficient to achieve a dense silica coating on the pigment in an amount from between about 0.6 % and about 10 % calculated as $SiO_2$ by weight based upon the weight of the treated pigment. Preferably, the sodium silicate is added in amounts between about 1.0 % and about 5.0 % each calculated as $SiO_2$ by weight based upon the weight of the treated pigment. Preferably a sodium silicate solution containing about 25 % $SiO_2$ and having a ration of $NaO_2:SiO_2$ of about 1:3.22 is used. It has been found that in order to achieve equilibrium with the titanium dioxide surface, the precipitation of the silica should be performed at a temperature of at least about 85°C. Preferably, the sodium silicate should be neutralized at a temperature of between about 85°C and about 95°C. The temperature of the slurry both prior to and during precipitation may be adjusted by the use of conventional heating means including, for example, the introduction of steam.

As previously stated, maintenance of the pH of the slurry during addition of the sodium silicate is critical to achieving optimum physical properties in the resultant pigment. It has been found that at temperatures of between 85°C and 95°C, to achieve optimal photostability, the pH of the slurry should be maintained at between about 9.8 and 10.1, most preferably at 10.0. It is important to have at least five minutes of conatct time between the pigment and the dissolved silica bevore neutralization begins. The pH of the slurry may be ajusted by the addition of an acid such as, for example, sulfuric acid ($H_2SO_4$) or by the addition of a base such as, for example, sodium hydroxide (NaOH), each in an amount sufficient to effect and achieve the desired change.

At least three neutralization steps should be used for the dense silica precipitation if the resultant pigment is to have adequate durablility and gloss characteristics in the paint films. The retention time for each step should be at least five minutes and a time of 20 to 30 minutes is preferred. Neutralization is accomplished by the addition of an acid, such as, for example, $H_2SO_4$ in stepped increments to downwardly adjust the pH. The neutralization steps should be accomplished at temperatures between about 85°C and about 95°C and preferably at about 90°C. The pH of the slurry after the first neutralization step should be between 9.2 and 9.4 and, most preferably about 9.3.

The third neutralization step should be employed to lower the pH to between about 3 and about 4 and, most preferably, to at about 3.

At the completion of the neutralization steps, the pH of the slurry is raised to between about 5 and about 6.5, preferably to about 5.5 by the addition of a base such as, for example, NaOH and is then maintained at that pH during subsequent prexipitation of the alumina coating. With the pH of the slurry maintained at approximately 5.5, introduction of an aluminium-containing material, i.e., sodium aluminate ($NaAlO_2$), and an acid are siultaneously added to maintain a constand pH. Preferably, concentrated $NaAlO_2$ and $H_2SO_4$ are simultaneously added in separate streams. Other suitable aluminum-containing materials include an aluminum sulfate solution which may be added simulteously with a base such as, for example, NaOH or aluminum sulfate and sodium aluminate solutions may be added sumultaneously. In a preferred emodiment, $H_2SO_4$ is added in an amount sufficient to maintain a constant pH of about 5.5 in the slurry as the hydrous alumuna precipitates. The aluminum containing material, i.e. sodium aluminate, is added in an amount sufficient to achieve an alumina level of between 1.5 % and about 10 % calculated as $Al_2O_3$ by weight based upon the total weight of the pigment. Preferably, sodium aluminate should be added in an amount sufficient to achieve an alumina level of between about 2.0 % and about 3.0 % by weight of the pigment.

After adjustment of the pH to approximately 7.5 by the addition of a base such as, for example, NaOH, the pigment is filtered, washed and dried using conventional techniques.

The resultant $TiO_2$ pigment includes a silica coating of between about 0.6 % and about 10 % calculated as $SiO_2$ by weight of the total pigment and an alumina coating of between about 1.5 % and about 3 % calculated as $Al_2O_3$ by

weight of the total pigment. In a preferred embodiment, the pigment includes a silica coating of between about 1.0 % and about 5.0 % by weight and an alumina coating of between about 2.0 % and about 3.0 % by weight.

The resultant pigment, when produced in accordance with the process of the present invention, has been found to be a commercially desirable pigment product with excellent photostability as determined by the following test. In this test, 3.0 grams of the titanium dioxide pigment are mulled into a paste with 1.5 to 2.0 cc's of a 75 % solution of glycerine in water. The paste is packed into a plastic cell and covered with a Pyrex microscope slide before exposure to radiation from a GE-type RS sunlamp. The amount of darkening of the paste caused by a photochemical reaction of the glycerine with the pigment is monitored at intervals by a reflectance (L) measurement using a Hunter color difference meter. More reactive pigments cause more darkening of the paste which is shown by more negative $\Delta$L values. Commercially acceptable pigments cause a decrease in L of no more than -4.0 after 22 hours of exposure in this test. When processed in accordance with the process of the present invention, the continuously prcessed pigment has a photostability of greater than -4.5 and , preferably, greater than -4.0.

The following esamples serve to illustrate certain preferred embodiments of the present invention and should not be construed as limiting the scope thereof.

Examples 1-14

In order to illustrate the pigments of the present invention, particularly showing the importance of careful control of both pH and temperature in precipitating the dense
silica, the following series of pigments was prepared by
a batch simulation of continuous finishing. Each pigment
was finished as a batch but the reagent-addition times
and holding times were those calculated to simulate continuous finishing. For this series, the finishing temperature was maintained at 90°C and the finishing proceeded as outlined in Table 1. The batch was cured for five
minutes at each step. After the second neutralization
step, the pH was reduced to 5.5 and maintained at that
point during the alumina precipitation. The pH was then
adjusted to 7.5 before filtration, washing, drying and
micronization. The finished pigments were tested for
photochemical stability by determining the change in re-
felctance, L, of a dispersion of the pigment in glycerine
after exposure to ultraviolet light. Treatment details
and photochemical data are summarized in Table 1.

The data of Table 1 illustrate that at 90°C, the best or
optimal silica coating, as evidence by the smallest change
in brightness value, was obtained in Example 5 where the
pH both before and after the silica addition was at 10.0
or 10.1, the pH after the first neutralization was 9.7 and
the pH after the second neutralization step was 9.3. This
yielded the most photostable pigment, $\Delta$L= -2.8 after a
22 hour exposure. Similarly, good results were obtained
in Example 9 where even thought the pH during and after
the silica addition was between 10.9 and 11.0, neutrali-

## Table 1

| Example No. | pH Before $SiO_2$ | %$SiO_2$ Added | pH After $SiO_2$ | ph, 1st Neutralization | ph, 2nd Neutralization | %$Al_2O_3$ Added[3] | Photostability Change in Brightness L, 22-Hr. Exposure |
|---|---|---|---|---|---|---|---|
| 1 | 11.0 | 1.4 | 10.9 | 9.7 | 9.3 | 2.0 | -4.3 |
| 2 | 10.0 | 1.4 | 10.0 | 9.6 | 8.4 | 2.0 | -5.3 |
| 3 | 11.0 | 1.4 | 11.0 | 10.6 | 10.6 | 2.8 | -5.3 |
| 4 | 11.0 | 1.4 | 11.0 | 9.8 | 8.6 | 2.0 | -4.1 |
| 5 | 10.0 | 1.4 | 10.1 | 9.7 | 9.3 | 2.8 | -2.8 |
| 6 | 10.0 | 1.4 | 10.1 | 8.9 | 7.7 | 2.8 | -4.8 |
| 7 | 10.0 | 1.0 | 10.0 | 9.6 | 9.2 | 2.0 | -3.9 |
| 8 | 10.0 | 1.0 | 10.0 | 8.8 | 7.6 | 2.8 | -5.4 |
| 9 | 11.0 | 1.0 | 10.9 | 9.7 | 9.3 | 2.8 | -3.2 |
| 10 | 11.0 | 1.0 | 11.0 | 10.5 | 9.3 | 2.8 | -4.7 |
| 11 | 11.0 | 1.0 | 10.9 | 10.5 | 9.3 | 2.0 | -4.3 |
| 12 | 10.0 | 1.0 | 9.8 | 8.6 | 8.2 | 2.0 | -5.2 |
| 13 | 10.5 | 1.2 | 10.5 | 9.7 | 8.9 | 2.4 | -3.9 |
| 14 | 10.5 | 1.2 | 10.5 | 9.7 | 8.9 | 2.4 | -4.0 |

zation was effected at pH 9.7 and pH 9.3 yielding a pigment exhibiting a $\Delta$L of -3.2.

Example 8 is illustrative of the effect of reducing the pH in the neutralization steps to 8.8 and 7.6, there being a corresponding reduction in photostability to L= -5.4. Similarly, an increase to 10.6 and 10.2 in the neutralization steps of Example 3 produced a reduction in photostability to $\Delta$L= -5.3.

## Examples 15-17

To illustrate the effect of the pH at which the hydrous alumina is precipitated, a pigment was prepared in accordance with the procedure of Examples 1-14 with the following exceptions.The pH of 90°C slurry ofpyrogenic titanium dioxide was adjusted to 10.0 before sufficient sodium silicate was added to obtain 5.0 % $SiO_2$ based upon the weight of $TiO_2$. The slurry was cured for 30 minutes after which the pH was reduced to the value shown in Table 2 by the rapid addition of $H_2SO_4$. Sodium aluminate and sulfuric acid were then added simultaneously to maintain the pH while adding 2 % $Al_2O_3$. The accelerated weathering data obtained from test panels of blue prints exposed in an Atlas Dew-cycle Weather-Ometer are summarized in Table 2.

### Table 2

#### Dew Cycle WeatherOmeter

| Example No. | pH | Final 60° Gloss | Weight Loss (mg) | Change in Brightness Rd |
|---|---|---|---|---|
| 15 | 5.5 | 28 | 24.6 | 4.5 |
| 16 | 7.0 | 27 | 24.8 | 4.9 |
| 17 | 8.5 | 23 | 26.6 | 4.5 |

As shown by these results, the pigment of Example 15 treated at a pH of 5.5 gave the highest gloss, lowest weight loss and smallest change in brightness.

Example 18

To illustrate the correspondence between batch simulation of continuous finishing and actual continuous finishing for the precipitation of dense silica, the following examples were prepared using the same pyrogenic titanium dioxide slurry as in the earlier examples. In both instances, the treatment temperature was 90°C and the pH prior to the addition of sodium silicate was 10.0. After the addition of 1.0 % $SiO_2$, the pH was reduced in steps to 9.8, 9. and 5.5. Sodium aluminate and sulfuric acid were then added simultaneously to maintain a pH of 5.5 while adding 2.3 % $Al_2O_3$. The pH was then adjusted to 7.5 prior to filtration. The retention time at each step was 20 minutes. Table 3 reflects the results of these tests:

### Table 3

| | Glycerine Test | | Dew-cycle Weather-Ometer | | |
|---|---|---|---|---|---|
| Finishing | Change in Brightness, $\Delta$L22-Hour Exposure | Final 60° Gloss | Weight Loss, mg | Change in Brightness | Rd |
| Batch Simulation Continuous | -2.5 | 21 | 34.8 | 9.5 | |
| lation Continuous | -2.4 | 27 | 29.6 | 9.0 | |

- 14 -

Although the foregoing Examples illustrate the formation
of certain specific $TiO_2$ pigments possessing certain
physical properties, it will be appreciated that the
teachings of this application encompass broader and
other combinations than recited in these Examples.
Accordingly, the present invention should be limited
only by the true scope of the appended claims.

WHAT IS CLAIMED IS:

1. A titanium dioxide pigment produced by a continuous wet finishing process and having a photostability of greater than about -4.5, said pigment having a coating of amorphous dense silica in an amount between about 0.6 % and about 10 % calculated as $SiO_2$ by weight based on the weight of the total pigment and a coating of hydrous alumina in an amount between about 1.5 % and about 10 % calculated as $Al_2O_3$ by weight based on the weight of the total pigment.

2. The pigment of claim 1 wherein said pigment has a photostability greater than about -4.0.

3. The pigment of claim 1 wherein said coating of amorphous dense silica is in an amount between about 1.0 % and about 5.0 % by weight of the total pigment.

4. The pigment of claim 1 wherein said coating of alumina is in an amount between about 1.5 % and about 3 % by weight of the total pigment.

5. A titanium dioxide pigment produced by a continuous wet finishing process and having a photostability of greater than about -4.0, said pigment having a coating of amorphous dense silica in an amount between about 1.0 % and about 5.0 % calculated as $SiO_2$ by weight based on the weight of the total pigment and a hydrous alumina coating in an amount between about 1.5 % and about 3 % calculated as $Al_2O_3$ by weight based on the weight of the total pigment.

6. A continuous process for producing a titanium dioxide
   pigment having improved photostability, said process
   including the steps of treating an aqueous slurry of
   a raw $TiO_2$ pigment by:

   adding to said slurry at a temperature of at least
   about 85°C and at a pH of between about 9.8 and 10.1
   a soluble silicate in an amount sufficient to achieve
   a dense silica coating on the treated pigment in an
   amount between about 0.6 % and about 10 % calculated
   as $SiO_2$ by weight based on the weight of the treated
   pigment;
   neutralizing said slurry in at least three incremental
   steps by the addition of acid in amounts sufficient to
   lower the pH of the slurry to between about 9.6 and
   about 9.8 after the first neutralization step, to
   between about 9.2 and about 9.4 after the second
   neutralization step, and to between about 3 and about
   4 after the third neutralization step;
   adding to said slurry at a pH of between about 5.0 and
   about 6.5 an aluminum-containing material in an amount
   sufficient to achieve a hydrous alumina coating on
   said treated pigment of between about 1.5 % and about
   10 % calculated as $Al_2O_3$ by weight based on the weight
   of the treated pigment;
   substantially neutralizing the slurry; and
   filtering, washing and drying the treated pigment.

7. The process of claim 6 wherein said soluble silicate
   is sodium silicate.

8. The process of claim 6 wherein said soluble silicate is added at a temperature of between about 85°C and about 95°C.

9. The process of claim 6 wherein said soluble silicate is added in an amount sufficient to yield a dense silica level on the pigment of between about 1.0 % and about 5.0 % by weight of the totalpigment.

10. The process of claim 6 wherein said slurry is main-tained at a pH of 10.0 during the addition of the soluble silicate.

11. The process of claim 6 wherein the pH of the slurry is adjusted to about 9.7 during the first neutralization step.

12. The process of claim 6 wherein the pH of the slurry is adjusted to about 9.3 during the second neutrali-zation step.

13. The process of claim 6 wherein the pH of the slurry is adjusted to about 3 during the third neutralization step.

14. The process of claim 6 wherein the acid is sulfuric acid.

15. The process of claim 6 wherein the pH of the slurry is raised to about 5.5 prior to the addition of the aluminum containing material.

16. The process of claim 6 wherein the pH of the slurry is maintained at 5.5 during the addition of the alu-minum containing material.

0073340

- 18 -

17. The process of claim 6 wherein the aluminum containing material is sodium aluminate.

18. The process of claim 6 wherein the aluminum containing material is added in an amount sufficient to yield an alumina level on the pigment of between about 2 % and about 3 % by weight of the total pigment.

19. The process of claim 6 wherein the slurry is substantially neutralized after the alumina addition to a pH of approcimately 7.5.

20. The titanium dioxide pigment produced by the process of claim 6.

21. A continuous process for producing a titanium dioxide pigment having improved photostability, said process including the steps of treating an aqueous slurry of a raw $TiO_2$ pigment by:
adding to said slurry at a temperature of between about 85°C and about 95°C and at a pH of between about 9.8 and about 10.1 a soluble silicate in an amount sufficient to achieve a dense silica coating on the treated pigment in an amount between about 1.0 % and about 5.0 % calculated as $SiO_2$ by weight based on the weight of the total pigment;
neutralizing said slurry in at least three incremental steps by the addition of acid in amounts sufficient to lower the pH of the slurry respectively to 9.7, 9.3 and 3 after each step;
adding to said slurry at a pH of about 5.5 an aluminum-containing material in an amount sufficient to achieve an alumina coating on the pigment of between about 1.5 % and about 3 % calculated as $Al_2O_3$ by weight based on the weight of the treated pigment; substantially neutralizing the slurry; and filtering, washing and drying the treated pigment.